# EUROPÄISCHE PATENTSCHRIFT

(11) **EP 1 257 432 B1**
(45) Veröffentlichungstag und Bekanntmachung des Hinweises auf die Patenterteilung: **25.05.2005**
(21) Anmeldenummer: 01902401.7
(22) Anmeldetag: 03.02.2001
(51) Int. Cl.: B60K 31/04, B60T 8/32

(54) **SCHALTUNGSANORDUNG UND VORRICHTUNG ZUR REGELUNG UND STEUERUNG DER FAHRGESCHWINDIGKEIT EINES KRAFTFAHRZEUGS**
CIRCUIT ARRANGEMENT AND DEVICE FOR REGULATION AND CONTROL OF THE SPEED OF A MOTOR VEHICLE
CIRCUITERIE ET DISPOSITIF DE REGULATION ET DE COMMANDE DE LA VITESSE D'UN VEHICULE

(30) Priorität: 09.02.2000 DE 10005744; 22.12.2000 DE 10064753
(43) Veröffentlichungstag der Anmeldung: 20.11.2002
(73) Patentinhaber: Continental Teves AG & Co. OHG, 60488 Frankfurt am Main (DE)
(72) Erfinder: GIERS, Bernhard, 60320 Frankfurt am Main (DE)
(74) Vertreter: Blum, Klaus-Dieter
(86) Internationale Anmeldenummer: PCT/EP2001/001168
(87) Internationale Veröffentlichungsnummer: WO 2001/058712

(56) Entgegenhaltungen:
- EP-A- 0 827 860
- EP-A- 0 849 109
- EP-A- 0 956 993
- DE-A- 3 836 471
- DE-A- 4 201 142
- DE-A- 19 823 303
- GB-A- 2 334 700

## Beschreibung

Die Erfindung bezieht sich auf ein Gesamtsystem zur Regelung und Steuerung der Fahrgeschwindigkeit und des Radschlupfes eines Kraftfahrzeugs, mit einer Funktionsgruppe zur Regelung der Fahrgeschwindigkeit nach einem von dem Fahrer vorgegebenen Sollwert, mit einer Funktionsgruppe zur Begrenzung der Fahrgeschwindigkeit durch Steuer- und/oder Regeleingriff auf einen von der Fahrsituation, von vorgegebenen Kriterien und von der Ist-Geschwindigkeit abhängigen Grenzwert und mit einem Radschlupfregelungssystem.

Aus der EP-A-849109 ist bereits eine gattungsgemäße Vorrichtung zur vorausschauenden Bestimmung eines Fahrkorridors eines Kraftfahrzeugs bekannt. Es handelt sich um ein automatisches Geschwindigkeits- und Abstandregelungssystem zur Einhaltung des Sicherheitsabstandes von Fahrzeugen untereinander. Das Gesamtsystem enthält Funktionsgruppen zur Regelung der Fahrgeschwindigkeit nach einem vom Fahrer vorgegebenen Sollwert und zur Begrenzung der Fahrgeschwindigkeit durch Steuerund/oder Regeleingriff auf einen von der Fahrsituation, von vorgegebenen Kriterien und von der Ist-Geschwindigkeit abhängigen Grenzwert. Auch wird vorgeschlagen, ABS-Sensorsignale, also Eingangssignale eines Radschlupfregelungssystems, zur Bestimmung der Radgeschwindigkeiten und damit zur Berechnung des Fahrkorridors einzusetzen.

In der DE-A-4201142 ist eine Fahrzeuggeschwindigkeits-Steuereinrichtung beschrieben, die in Verbindung mit einem Fahrzeug-Navigationssystem verwendet wird. Die Steuereinrichtung empfängt Informationen über eine Kurve, errechnet aus dem Krümmungsradius die Fahrzeug-Grenzgeschwindigkeit und verhindert durch eine Warnung und/oder durch eine Abbremsung ein Überschreiten der Fahrzeug-Grenzgeschwindigkeit.

Des weiteren ist aus der DE-C2-4434022 ein Verfahren und eine Vorrichtung zur Begrenzung der Fahrgeschwindigkeit eines Kraftfahrzeuges auf eine vorgegebene Grenzgeschwindigkeit bekannt. Diese Vorrichtung enthält einen Tempomat, der die Fahrgeschwindigkeit bestimmt, wenn die vom Fahrer angeforderte Geschwindigkeit im Bereich einzuhaltender Geschwindigkeiten liegt. Wenn die vom Fahrer angeforderte Geschwindigkeit in einem Bereich zu vermeidender Geschwindigkeiten liegt, erfolgt ein die Geschwindigkeit steuernder Systemeingriff nach einer vorgegebenen Steuerungskennlinie als Funktion der Ist-Geschwindigkeit.

In der DE-C2-19509494 ist eine Vorrichtung zur Regulierung der Fahrgeschwindigkeit eines Kraftfahrzeugs beschrieben, die wahlweise eine Tempomat-Regelung oder eine Begrenzung der Geschwindigkeit auf eine einstellbare Grenzgeschwindigkeit bewirkt.

Während die bekannten Geschwindigkeitsregler im wesentlichen darauf beschränkt sind, die von dem Fahrer vorgegebene Soll-Geschwindigkeit einzustellen und eine Überschreitung dieser Geschwindigkeit oder einer Höchstgeschwindigkeit zu verhindern, ist es Ziel der vorliegenden Erfindung, den Fahrer in noch stärkerem Maße zu entlasten und eine Fahrgeschwindigkeit einzustellen, die in komfortabler Weise unterschiedlichen Situationen, wie Kurvenfahrt oder Geradeausfahrt, hohen oder niedrigen Reibbeiwert, normale Straße oder Schlechtweg etc. Rechnung trägt. Es soll eine vergleichsweise weitgehende Entlastung des Fahrers durch selbsttätige Anpassung der Geschwindigkeit an sich ändernde Situationen erreicht werden.

Es hat sich herausgestellt, dass diese Aufgabe durch das im Anspruch 1 beschriebene Gesamtsystem gelöst werden kann. Dabei wird der vom Fahrer vorgegebene Sollwert der Fahrgeschwindigkeit in für die Fahrsicherheit, für die Fahrstabilität oder für den Fahrkomfort kritischen Situationen in Abhängigkeit von Eingangs- oder Regelgrößen des Radschlupfregelsystems geregelt und/oder begrenzt wird.

Nach einem besonders vorteilhaften Ausführungsbeispiel der Erfindung wird der Grenzwert der, Fahrgeschwindigkeit bei Erkennung von Kurvenfahrt in Abhängigkeit von dem Kurvenradius oder von dem Lenkwinkel oder bei einer über einem Beschleunigungsgrenzwert liegenden Querbeschleunigung herabgesetzt.

Bei der Erfindung wird der Grenzwert der Fahrgeschwindigkeit in Abhängigkeit von dem aktuellen Reibwert (Reibbeiwert) oder einer diesen Wert wiedergebenden Messgröße variiert. Der Reibbeiwert ist ohnehin für ein zu dem Gesamtsystem gehörendes ABS, ASR oder ESP etc. eine wichtige Regelgröße, die erfindungsgemäß auch zur Regelung der Fahrgeschwindigkeit genutzt wird.

In den beigefügten Unteransprüchen sind noch weitere vorteilhafte Ausführungsbeispiele der Erfindung beschrieben.

Durch die erfindungsgemäß vorgesehen Integration der Fahrgeschwindigkeitsregelung mit einem Radschlupfregelungssystem, wie ABS, ASR, ESP etc., können zur Regelung und Steuerung der Fahrgeschwindigkeit wesentliche Zusatzinformationen, z.B. über Geradeausfahrt oder Kurvenfahrt, Querbeschleunigung, Reibbeiwert, Schlechtweg etc. ausgewertet werden. Dies wird ohne eine nennenswerte Erhöhung des Herstellungsaufwandes erreicht, weil die für die Geschwindigkeitsregelung zusätzlichern Informationen von den Radschlupfregelungssystemen zur Verfügung gestellt werden

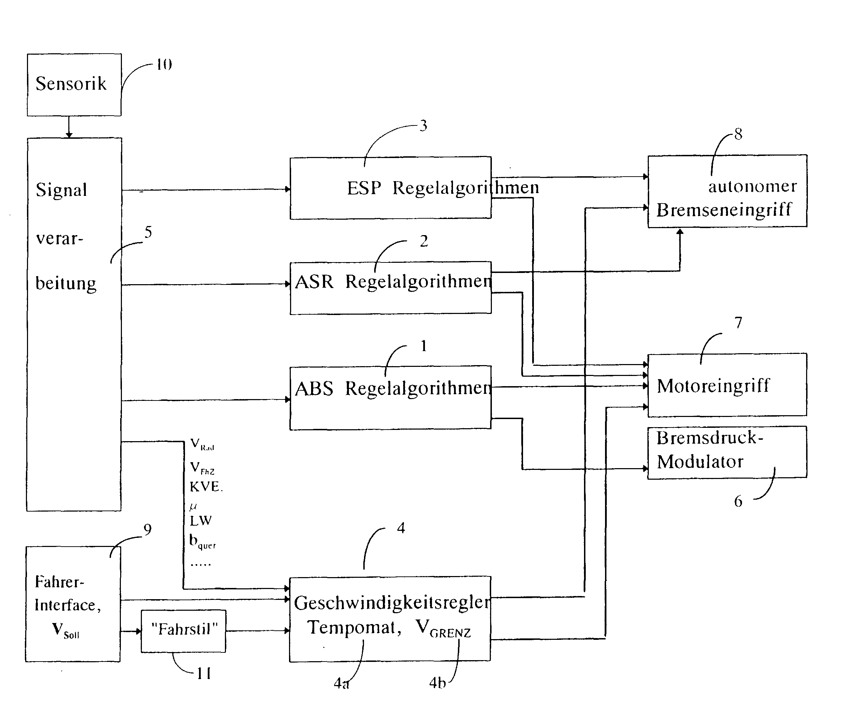

Die beigefügte Abbildung zeigt in schematisch vereinfachter Darstellung die wesentlichen Elemente einer Schaltungsanordnung nach der Erfindung und dient zur Veranschaulichung des der Erfindung zugrunde liegenden Konzepts.

Dargestellt ist ein Gesamtsystem, das in dem wiedergegebenen Ausführungsbeispiel der Erfindung aus verschiedenen Funktionsgruppen 1, 2, 3 und 4 besteht, die alle an eine als Schaltblock dargestellte Eingangsschaltung 5 angeschlossen sind und von dieser mit den für die Regelungs- und Steuerungsvorgänge benötigten Informationen versorgt werden. Mit "Sensorik" ist ein Block 10 bezeichnet, der die verschiedenartigen Sensoren und Eingangsstufen (Radsensoren, Lenkwinkelsensor, Querbeschleunigungssensor, Gangstufenerkennung, Kurvenerkennung etc.) vereinigt, mit denen vor allem die für eine Radschlupfregelung erforderlichen Eingangsgrößen und Informationen gewonnen werden.

Der Eingangs-Schaltblock 5 symbolisiert eine Signalaufbereitungs- und Signalauswertungsschaltung, in der die aus den verschiedenen Quellen stammenden, insbesondere mit Hilfe der Sensorik 10 gewonnenen Daten verarbeitet werden.

In der Funktionsgruppe 1, in der die unter dem Begriff "ABS Regelalgorithmen" zusammengefassten Funktionen oder Programmschritte enthalten sind, werden auf Basis von Radsensorsignalen Bremseneingriffs- und Bremsensteuerungssignale gewonnen, die in bekannter Weise das Blockieren der Fahrzeugräder verhindern. An den Ausgang der Funktionsgruppe 1 ist daher ein Bremsdruckmodulator 6 angeschlossen. Ein Motoreingriff 7 durch den ABS-Modul (1) ist ebenfalls vorgesehen, z.B. zur Regelungs des Motorschleppmoments in kritischen Situationen.

Die Schritte, Funktionen und Berechnungen zur Antriebsschlupfregelung oder Traktionssteuerung des Fahrzeugs sind in der Funktionsgruppe 2 zusammengefasst, deren Ausgangssignale zum "Motoreingriff" 7 und zum "autonomen Bremseneingriff" 8 geleitet werden.

Die Signalauswertung und Signalverarbeitung sowie die Regelalgorithmen zur Regelung der Fahrstabilität eines Fahrzeugs (ESP-Regelalgorithmen) sind in der Funktionsgruppe 3 zusammengefasst, deren Ausgänge zum "autonomen Bremseneingriff" 8 und zum "Motoreingriff" 7 führen.

Die Ausgangssignale der Funktionsgruppen 1, 2, 3 werden in bekannter Weise in Bremsdruck-Modulationssignale (6) und in Motoreingriffssignale (7) umgesetzt. Der Bremsdruckmodulator 6 ist wesentlicher Bestandteil eines ABS, der Motoreingriff 7 wird vor allem zur Antriebsschlupf- und Traktionsregelung benötigt. Die Funktionsgruppe 8 ist mit "autonomer Bremseneingriff" bezeichnet, weil in dieser Gruppe mit Hilfe der Bremsanlage, jedoch ohne Bremsbetätigung durch den Fahrer, die Ausgangssignale der "ESP Regelalgorithmen" 3 in Bremsen-Ansteuerungssignale zur Aufrechterhaltung und Wiederherstellung der Fahrstabilität umgesetzt werden.

Eine wesentliche Komponente der erfindungsgemäßen Gesamtschaltung ist die als Geschwindigkeitsregler bezeichnete Funktionsgruppe 4, die einen "Tempomat" 4a und einen Geschwindigkeitkeitsbegrenzer "V_{Grenz}" 4b enthält. Erfindungsgemäß übernimmt außerdem der Geschwindigkeitsregler 4 die Regelung und Steuerung der Fahrgeschwindigkeit des Kraftfahrzeugs in Abhängigkeit von Informationen, welche die Signalverarbeitung 5 liefert.

Der Geschwindigkeitsregler 4 symbolisiert Schaltungsteile oder Programmteile zur Regelung der Fahrgeschwindigkeit des Fahrzeugs in Abhängigkeit von einem Geschwindigkeits-Sollwert Vₛₒₗₗ , den der Fahrer durch Betätigung des Gaspedals und/oder von Schaltern vorgibt. Dies wird in der beigefügten Abbildung durch ein "Fahrer-Interface" 9 zum Ausdruck gebracht. Außerdem enthält der Geschwindigkeitsregler 4 die Schaltungsteile und Programmschritte zur Begrenzung der Fahrgeschwindigkeit des Fahrzeugs durch Steuer- und/oder Regeleingriff auf einen von der Fahrsituation, von vorgegebenen Kriterien und von der Ist-Geschwindigkeit des Fahrzeugs abhängigen Grenzwert V_{Grenz}. Als Eingangssignale erhält der Geschwindigkeitsregler 4 Informationen über die vom Fahrer vorgegebene Soll-Geschwindigkeit Vₛₒₗₗ. Außerdem werden dem Geschwindigkeitsregler 4 die Informationen über die Fahrzeuggeschwindigkeit V_{FhZ}, über die Radgeschwindigkeiten V_{Rad} , Querbeschleunigung b_{quer} , Kurvenerkennung KVE, Lenkwinkel LW, aktueller Reibbeiwert usw. zugeführt. Schlechtwegerkennung könnte ebenfalls vorgesehen werden. Derartige Informationen werden bekanntlich für Radschlupfregelungssysteme ABS (1), ASR (2) und ESP (3) ohnehin benötigt.

Der Geschwindigkeitsregler 4 ist also erfindungsgemäß als Teil des beschriebenen Gesamtsystems ausgebildet und umfasst sowohl einen Geschwindigkeitsregler 4a (Tempomat) zum Einstellen einer bestimmten Fahrgeschwindigkeit in Abhängigkeit von dem Geschwindigkeits-Sollwert V_{Soll}, den der Fahrer vorgibt, als auch Schritte oder Maßnahmen (4b) zur Begrenzung der Fahrgeschwindigkeit und zur Vorgabe eines bestimmten Geschwindigkeitsverlaufs in Abhängigkeit von der vom Fahrer vorgegebenen Sollgeschwindigkeit und von der aktuellen Fahrsituation, d.h. Geradeausfahrt oder Kurvenfahrt, vom momentanen Reibbeiwert oder Straßenzustand - trockene Straße oder Straßenglätte -, vom Kurvenradius und/oder von der aktuellen Querbeschleunigung des Fahrzeugs, die von der Ist-Geschwindigkeit und dem Kurvenradius abhängt. Im allgemeinen dürfte es sinnvoll sein und wird als komfortabel empfunden, wenn die Fahrgeschwindigkeit in der Kurve - je nach Kurvenradius und Fahrstil des Fahrers - reduziert wird.

Nach einem besonders vorteilhaften Ausführungsbeispiel der Erfindung werden die Grenzwerte der Fahrgeschwindigkeit bzw. der Grenzwertverlauf in Abhängigkeit von der Fahrsituation, dem Kurvenradius etc. an den bevorzugten Fahrstil, die Fahrweise oder die Fahrcharakteristik des Fahrers angepasst. Diese Anpassung an den "Fahrstil" wird in der beigefügten Abbildung durch ein Funktionsschaltung 11 symbolisiert.

Die Anpassung an den Fahrstil (11) kann durch Einstellung der Reglung oder Steuerung nach vorgegebenem Schemata erfolgen. Es ist jedoch auch möglich, im Geschwindigkeitsregler 4 einen Lernalgorithmus zu implementieren, um eine individuelle Anpassung der Geschwindigkeit bzw. des Geschwindigkeits-Grenzwertverlaufs an den Fahrer herbeizuführen. Es sind viele Wege denkbar, um dieses Ziel zu erreichen. Beispielsweise kann durch Beobachtung des individuellen Fahrverhaltens die maximale Querbeschleunigung des Fahrzeugs, auf die der Fahrer üblicherweise durch Herabsetzen der Fahrzeuggeschwindigkeit reagiert, sensiert und ausgewertet werden und ein entsprechender Grenzwert oder Grenzwertverlauf vorgegeben werden. Die relevanten Werte werden dabei zweckmäßigerweise über eine längere Zeitspanne gemittelt. Dies ist nur ein Ausführungsbeispiel von mehreren.

Die wesentlichen Überlegungen, die zu der Erfindung führten, werden im folgenden nochmals zusammengefasst.

Heutige Radschlupfregelungssysteme (1 bis 3) besitzen in der Regel eine Bus-Schnittstelle zum Motormanagement (7), welche z.B. die Drosselklappenstellung des Antriebsmotors direkt beeinflussen kann. Das Motormanagement (7) wird beispielsweise bei einer Antriebsschlupfregelung (2) zur Reduzierung von überflüssigem Antriebsmoment genutzt, bei einem Antiblockiersystem (1) zur Reduzierung von ungewolltem Schleppmoment durch den Antriebsmotor.

Erfindungsgemäß werden die in diesen Radschlupfregelungssystemen (1,2,3) vorhandenen Schnittstellen zur Antriebsmotorregelung genutzt. Von der Möglichkeit des direkten Bremseneingriffs (8) oder der Bremsdruckmodulation (6) wird zum Aufbau eines Bremsenmomentes ohne Fahrereingriff (8) bzw. zur Bremsdruckmodulation (6) während eines Bremsvorganges (6) Gebrauch gemacht.

Die zuvor beschriebenen Funktionen werden zweckmäßigerweise durch Software, d.h. durch entsprechende Programmierung des Bremseneingriffs und des Motormanagements realisiert.

Durch die erfindungsgemäße Konzept einer Gesamtschaltung, nämlich durch Integration von Radschlupfregelungssystemen mit einem Geschwindigkeitsregler wird die Funktion des klassischen Geschwindigkeitsreglers entscheidend verbessert und erweitert. Während derzeitig Geschwindigkeitsregler überwiegend ohne Bremseneingriff auskommen müssen, steht bei Integration des Geschwindigkeitsreglers in das Radschlupfregelungssystem grundsätzlich die Möglichkeit eines Bremseneingriffs zur Verfügung. Bei Bergabfahrt kann die Geschwindigkeit des Fahrzeugs unter Zuhilfenahme des Motorschleppmomentes und des Bremsmoments auf den gewünschten Sollwert abgeregelt werden.

Die in heutigen Radschlupfregelsystemen vorhandenen, sehr präzisen Algorithmen zur Bestimmung der Rad- und Fahrzeuggeschwindigkeit erlauben eine sehr genaue und effektive Sollwertregelung. Im Vergleich zu einem herkömmlichen Tempomat ergeben sich u.a. folgende Vorteile:
- Entfall eines Steuergerätes (Geschwindigkeitsregler); dies führt zur Kostenreduktion.
- Entfall von Sensoren zur Geschwindigkeitsmessung durch Nutzung der ABS- Sensoren ;
- Funktionserweiterung durch standardmäßige Möglichkeit des Aufbaus von Bremsmomenten;
- Reduzierung der Gefahr von Fehleingriffen durch den Einsatz der bei Radschlupfregelsystemen übliche Sicherheitstechnik;
- die zwischen Steuergeräten redundante Signalaufbereitung der Fahrzeuggeschwindigkeit entfällt.
- Weitere Funktionsverbesserungen ergeben sich durch die Nutzung der für Radschlupfregelungssysteme ohnehin benötigten Kurvenerkennung, Schlechtwegerkennung, Schlupferkennung etc.;
- die Koordination der Radschlupfregelung mit der Geschwindigkeitsregelung ermöglicht eine genauere Einhaltung der vorgegebenen Sollgeschwindigkeit;
- des weiteren ermöglicht die Koordination der Radschlupfregelung mit der Geschwindigkeitsregelung eine Funktionserweiterung derart, dass durch Anforderung der Schlupfregelung die vorgegebene Fahrzeug-Sollgeschwindigkeit dauerhaft oder für bestimmte Zeit automatisch begrenzt werden kann. Dies wird beispielsweise durch Informationen ermöglicht, die mit ESP-Sensoren gewonnen werden können, nämlich durch Informationen über den aktuellen Reibwert oder über das Fahrmanöver, durch Kurvenfahrterkennung, Schlechtwegerkennung, Erkennung von Querbeschleunigung oder von Lenkbewegungen etc.

Die Vorteile gegenüber den bisher bekannten Systemen sind also erheblich.

## Patentansprüche

1. Gesamtsystem zur Regelung und Steuerung der Fahrgeschwindigkeit und des Radschlupfes eines Kraftfahrzeugs,
mit einer Funktionsgruppe (4a) zur Regelung der Fahrgeschwindigkeit nach einem von dem Fahrer vorgegebenen Sollwert (V_{Soll}),
mit einer Funktionsgruppe (4b) zur Begrenzung der Fahrgeschwindigkeit durch Steuer- und/oder Regeleingriff auf einen von der Fahrsituation, von vorgegebenen Kriterien und von der Ist-Geschwindigkeit abhängigen Grenzwert (V_{GRENZ}) und
mit einem Radschlupfregelungssystem (1, 2, 3),
**dadurch gekennzeichnet,**
**dass** der vom Fahrer vorgegebene Sollwert (Vₛₒₗₗ) der Fahrgeschwindigkeit in für die Fahrsicherheit, für die Fahrstabilität oder für den Fahrkomfort kritischen Situationen in Abhängigkeit von Eingangs- oder Regelgrößen des Radschlupfregelsystems (1, 2, 3) geregelt und/oder begrenzt wird und dass der Grenzwert der Fahrgeschwindigkeit (V_{GRENZ}) in Abhängigkeit von einer den Reibbeiwert wiedergebenden Messgröße variiert wird, welche mit Hilfe des Radschlupfregelsystems (1, 2, 3) gewonnen und der Funktionsgruppe zur Begrenzung der Fahrgeschwindigkeit zugeführt wird.

2. Gesamtsystem nach Anspruch 1, **dadurch gekennzeichnet, dass** der Grenzwert der Fahrgeschwindigkeit (V_{GRENZ}) bei Erkennung von Kurvenfahrt (KVE)in Abhängigkeit von dem Kurvenradius oder von dem Lenkwinkel (LW) und/oder bei einer über einem Beschleunigungsgrenzwert liegenden Querbeschleunigung (b_{quer}) oder einer entsprechenden von der Querbeschleunigung abgeleiteten Messgröße herabgesetzt wird.

3. Gesamtsystem nach Anspruch 1 oder 2, **dadurch gekennzeichnet, dass** der Grenzwert der Fahrgeschwindigkeit während einer Kurvenfahrt in Abhängigkeit von dem aktuellen Reibbeiwert oder von einer den Reibbeiwert wiedergebenden Messgröße herabgesetzt wird.

4. Gesamtsystem nach einem oder mehreren der Ansprüche 1 bis 3, **dadurch gekennzeichnet, dass** der Grenzwert der Fahrgeschwindigkeit (V_{GRENZ}) und/oder der Grenzwertverlauf bei Kurvenfahrt, bei Querbeschleunigung, auf niedrigem Reibbeiwert etc. dem "Fahrstil" oder der Fahrcharakteristik des Fahrers durch Vorgabe oder Voreinstellung einer Steuerungs- oder Geschwindigkeitskennlinie oder durch Erfassen des Fahrverhaltens des Fahrers in einem Lernprozess angepasst werden.

## Claims

1. Overall system for regulation and control of the driving speed and the wheel slip of a motor vehicle, including
a functional group (4a) for regulating the driving speed according to a nominal value (Vₙₒₘᵢₙₐₗ) predetermined by the driver,
a functional group (4b) for limiting the driving speed by a control and/or regulation intervention with respect to a limit value (Vₗᵢₘᵢₜ) that depends on the driving situation, predetermined criteria and the actual speed,
a wheel slip control system (1, 2, 3),
**characterized in that** in dependence on input or control quantities of the wheel slip control system (1, 2, 3), the nominal value (Vₙₒₘᵢₙₐₗ) of the driving speed predetermined by the driver is controlled and/or limited in situations critical in terms of driving safety, driving stability, or driving comfort, and **in that** the limit value of the driving speed (Vₗᵢₘᵢₜ) is varied in dependence on a measured quantity being representative of the coefficient of friction, being acquired by means of the wheel slip control system (1, 2, 3) and sent to the functional group for limiting the driving speed.

2. Overall system as claimed in claim 1,
**characterized in that** the limit value of the driving speed (Vₗᵢₘᵢₜ), when cornering is detected (CD), is reduced in dependence on the curve radius or the steering angle (SA), and/or when a transverse acceleration (bₜᵣₐₙₛᵥₑᵣₛₑ) or a corresponding measured quantity which is derived from the transverse acceleration prevails.

3. Overall system as claimed in claim 1 or 2,
**characterized in that** the limit value of the driving speed during cornering is reduced in dependence on the current coefficient of friction or a measured quantity representative of the coefficient of friction.

4. Circuit arrangement as claimed in any one or more of claims 1 to 3,
**characterized in that** the limit value of the driving speed (Vₗᵢₘᵢₜ) and/or the limit value variation during cornering, during transverse acceleration, at a low coefficient of friction, etc., is adapted to the 'style of driving' or the driving characteristics of the driver by predefining or presetting a control or speed characteristics or by gathering the driving behavior of the driver in a learning process.

## Revendications

1. Système global de régulation et de commande de la vitesse de marche et du glissement des roues d'un véhicule automobile,
avec un groupe fonctionnel (4a) pour la régulation de la vitesse de marche selon une valeur de consigne (Vₛₒₗₗ) prédéfinie par le conducteur,
avec un groupe fonctionnel (4b) pour limiter la vitesse de marche par intervention de la commande et/ou de la régulation à une valeur limite (V_{GRENZ}) dépendant de la situation de conduite, de critères prédéfinis et de la vitesse réelle, et
avec un système de régulation du glissement des roues (1, 2, 3),
**caractérisé**
**en ce que** la valeur de consigne (Vₛₒₗₗ), prédéfinie par le conducteur, de la vitesse de marche est régulée et/ou limitée dans des situations critiques pour la sécurité de conduite, pour la stabilité de conduite ou pour le confort de conduite, en fonction de grandeurs d'entrée ou de régulation du système de régulation du glissement des roues (1, 2, 3),
et **en ce que** la valeur limite de la vitesse de marche (V_{GRENZ}) est modifiée en fonction d'une grandeur de mesure traduisant le coefficient de friction, laquelle est obtenue à l'aide du système de régulation du glissement des roues (1, 2, 3) et amenée au groupe fonctionnel pour limiter la vitesse de marche.

2. Système global selon la revendication 1, **caractérisé en ce que** la valeur limite de la vitesse de marche (V_{GRENZ}) est abaissée en cas de détection d'une conduite en courbe (KVE), en fonction du rayon de la courbe ou de l'angle de braquage (LW) et/ou dans le cas d'une accélération transversale (b_{quer}) ou d'une grandeur de mesure correspondante dérivée de l'accélération transversale supérieure à une valeur limite d'accélération.

3. Système global selon la revendication 1 ou 2, **caractérisé en ce que** la valeur limite de la vitesse de marche pendant une conduite en courbe est réduite en fonction du coefficient de friction actuel ou d'une grandeur de mesure traduisant le coefficient de friction.

4. Système global selon une ou plusieurs des revendications 1 à 3, **caractérisé en ce que** la valeur limite de la vitesse de marche (V_{GRENZ}) et/ou de l'allure de la valeur limite en cas de conduite en courbe, en cas d'accélération transversale, pour un faible coefficient de friction etc., est adaptée au "style du conducteur" ou à la caractéristique de conduite du conducteur, par sélection ou préréglage d'une courbe caractéristique de commande ou de vitesse, ou par détection du comportement en conduite du conducteur, au cours d'un processus d'apprentissage.
